# FASCICULE DE BREVET EUROPEEN

(11) **EP 4 066 106 B1**
(45) Date de publication et mention de la délivrance du brevet: **12.11.2025**
(21) Numéro de dépôt: 20810987.6
(22) Date de dépôt: 25.11.2020
(51) Int. Cl.: G06F 9/4401, G06Q 20/32, G06Q 20/20, G07F 7/08

(54) **PROCÉDÉ DE COMMUNICATION ENTRE DEUX SOUS-SYSTÈMES CONSTITUTIFS D'UN TERMINAL DE PAIEMENT MODULAIRE**
KOMMUNIKATIONSVERFAHREN ZWISCHEN ZWEI SUBSYSTEMEN, DIE EIN MODULARES ZAHLUNGSTERMINAL BILDEN
METHOD OF COMMUNICATION BETWEEN TWO SUB-SYSTEMS CONSTITUTING A MODULAR PAYMENT TERMINAL

(30) Priorité: 29.11.2019 FR 1913497
(43) Date de publication de la demande: 05.10.2022
(73) Titulaire: Banks and Acquirers International Holding, 75015 Paris (FR)
(72) Inventeur: POUHAER, Benoît, 92160 ANTONY (FR); SCHANG, Bernard, 78320 LE MESNIL SAINT DENIS (FR); CAZOU, Dominique, 33127 SAINT JEAN D'ILLAC (FR); AUFFRAY, Christophe, 92500 RUEIL MALMAISON (FR)
(74) Mandataire: LLR
(86) Numéro de dépôt international: PCT/EP2020/083424
(87) Numéro de publication internationale: WO 2021/105245

(56) Documents cités:
- US-A1- 2018 005 223
- US-B1- 10 120 427

## Description

### Domaine de l'invention

Le domaine de l'invention est celui des terminaux modulaires. Plus précisément, l'invention concerne un procédé de communication entre les sous-systèmes constitutifs d'un terminal modulaire, notamment un terminal de paiement.

### Art antérieur et ses inconvénients

Dans le domaine des terminaux de paiement notamment, une nouvelle génération de terminal modulaire et riche en fonctionnalité apparaît. De tels terminaux, dits intelligents, peuvent comprendre un premier ensemble de composants comprenant notamment un processeur et une mémoire, appelé premier sous-système prenant par exemple la forme d'une tablette tactile offrant des services métier utiles à la gestion d'un commerce, couplé à un deuxième ensemble de composants (comprenant également un processeur et une mémoire qui sont indépendants du premier sous-système) appelé deuxième sous-système prenant par exemple la forme d'un terminal de paiement, acceptant différents moyens de paiement.

Le premier sous-système, se présentant par exemple sous la forme d'une tablette, embarque un premier système d'exploitation, comme par exemple le système d'exploitation Android^{™}. Il est possible d'intégrer simplement et rapidement des applications métier, telles que des applications de facturation par exemple, et d'ainsi améliorer l'expérience des commerçants. L'une des fonctions d'un tel système d'exploitation se rapporte à la gestion de la consommation d'énergie du premier sous-système. Par exemple, le système d'exploitation du premier sous-système est conçu pour entrer dans un état de fonctionnement dit état de veille lorsqu'à l'expiration d'une durée déterminée aucune interaction avec une interface utilisateur du premier sous-système n'est détectée. Dans cet état de veille, certaines des ressources de ce premier sous-système peuvent être rendues indisponibles contribuant ainsi à réduire la consommation d'énergie.

Le deuxième sous-système, dit sous-système de paiement, quant à lui, embarque un deuxième système d'exploitation spécifique et sécurisé capable d'exécuter des opérations relatives à des transactions sécurisées telles que des transactions de paiement. Les opérations mises en oeuvre dans le cadre de l'exécution de transactions sécurisées utilisent et génèrent des données sensibles (clés de chiffrements, identifiants, données biométriques et/ou données de paiement), il est donc important que ces opérations soient exécutées avec un haut niveau de sécurité.

Par exemple, dans le contexte d'utilisation d'un terminal de paiement modulaire, la tablette et le sous-système de paiement échangent des données entre eux afin de permettre la mise en oeuvre des services nécessaires à l'activité du commerce (et notamment aux paiements effectués par les clients).

Cependant, les deux sous-systèmes constituant le terminal de paiement modulaire exécutant deux systèmes d'exploitation différents, il arrive qu'un état de fonctionnement de l'un des sous-systèmes ne permette pas la mise en oeuvre du service requis, cette dernière nécessitant l'utilisation de ressources mises en oeuvre par chacun des deux sous-systèmes.

Par exemple, lorsque le système d'exploitation de la tablette est en état de veille, certaines de ses ressources sont rendues indisponibles et si le sous-système de paiement requiert ces ressources pour exécuter un service, le sous-système de paiement se trouve dans l'incapacité de le faire. Une telle situation impacte négativement l'expérience utilisateur, tant du commerçant que des clients en prolongeant ou complexifiant les opérations nécessaires à la commande et au paiement de produits et/ou de services en boutique.

Il existe donc un besoin de fournir une solution permettant d'améliorer la collaboration entre les deux sous-systèmes constituant le terminal de paiement.

Le document US2018/005223 A1 divulgue un système de paiement constitué d'un dispositif marchand et d'un lecteur de paiement.

### Exposé de l'invention

L'invention répond à ce besoin en proposant un procédé de communication énoncé par la revendication 1.

Une telle solution permet à chacun des sous-systèmes constitutifs de l'équipement électronique modulaire d'échanger des données relatives à leur état de fonctionnement respectif et, le cas échéant, de modifier leur état de fonctionnement courant en fonction des données relatives à un état de fonctionnement de l'autre sous-système ainsi échangées. Les sous-systèmes sont intégrés (ou embarqués) en fonction de l'arrangement de l'équipement électronique, comme explicité par la suite : soit une intégration forte, dans laquelle les deux sous-systèmes sont intégrés au sein d'une seul et même équipement électronique, soit une intégration légère, dans laquelle les deux sous systèmes sont connectés entre eux, par l'intermédiaire d'un dispositif de connexion.

Ainsi, un tel procédé permet de s'assurer que les ressources nécessaires à la mise en oeuvre d'un service sont disponibles lorsque la mise en oeuvre de ce service est requise.

En faisant en sorte que chacun des sous-systèmes constitutifs du terminal de paiement adapte, le cas échéant, son état de fonctionnement courant à celui de l'autre sous-système permet de s'assurer que les opérations relatives à des transactions de paiement sont toujours effectuées avec le niveau de sécurité requis puisque le sous-système de paiement se trouve dans un état de fonctionnement en adéquation avec l'état de fonctionnement de la tablette, par exemple.

De même, le présent procédé permet au sous-système de paiement de bénéficier de la capacité de la tablette à entrer dans un état de fonctionnement dit état de veille contribuant ainsi à réduire la consommation d'énergie du sous-système de paiement.

Selon une caractéristique du procédé objet de l'invention, lorsque l'état de fonctionnement courant du deuxième sous-système est similaire au deuxième état de fonctionnement du premier sous-système, le procédé comprend une étape d'émission, à destination du deuxième sous-système, d'un message comprenant une donnée représentative du deuxième état de fonctionnement du premier sous-système.

Ainsi, le deuxième sous-système est informé de l'état courant du premier sous-système.

Selon une autre caractéristique du procédé objet de l'invention, le procédé comprend en outre une étape de réception d'un message, émis par le deuxième sous-système, comprenant une donnée représentative du nouvel état de fonctionnement du deuxième sous-système.

Ainsi, le premier sous-système est informé de l'état courant du deuxième sous-système.

Selon un mode de réalisation du procédé objet de l'invention, celui-ci comprend en outre une étape de mémorisation, dans un registre mémoire du premier sous-système, de ladite donnée représentative du deuxième état de fonctionnement du premier sous-système et de ladite donnée représentative du nouvel état de fonctionnement courant du deuxième sous-système.

Ainsi, chaque sous-système maintient son état de fonctionnement courant ainsi que le dernier état de fonctionnement de l'autre sous-système. Cela permet à chaque sous-système de pouvoir adapter son état de fonctionnement en fonction de l'état de fonctionnement courant de l'autre sous-système et de la nature de l'événement détecté sans avoir à attendre la réception d'un message comprenant une donnée relative à l'état de fonctionnement de l'autre sous-système.

Selon un autre mode de réalisation, un état de fonctionnement du premier sous-système et du deuxième sous-système appartient à un groupe comprenant au moins :
- un état éveillé,
- un état de veille,
- un état de veille profonde,
- un état inactif,
- un état éteint.

Selon une caractéristique particulière du procédé objet de l'invention, lorsque le premier sous-système est un sous-système de communication, l'évènement déclenchant un changement d'état de fonctionnement dudit premier sous-système appartient à un groupe comprenant :
- détection d'un niveau de batterie inférieur ou égal à un premier seuil,
- détection d'un niveau de puissance d'un signal radio permettant une transmission de donnée à destination d'un autre équipement inférieur ou égal à un deuxième seuil,
- détection d'une action effectuée au moyen d'une interface utilisateur du premier sous-système,
- réception d'un message en provenance d'un autre équipement,
- réception d'un message en provenance du deuxième sous-système,
- expiration d'un compte à rebours.

Selon encore une autre caractéristique particulière du procédé objet de l'invention, lorsque le premier sous-système est un terminal de paiement, l'évènement déclenchant un changement d'état de fonctionnement dudit premier sous-système appartient à un groupe comprenant :
- détection d'un niveau de batterie inférieur ou égal à un premier seuil,
- réception d'un message en provenance du deuxième sous-système, expiration d'un compte à rebours,
- lecture de données en provenance d'un dispositif de paiement.

L'invention concerne également un équipement électronique énoncé à la revendication 9.

Un tel équipement électronique comprend ainsi deux sous-systèmes, qui sont en quelque sorte deux équipements plus ou moins indépendant qui sont intégrés au sein de l'équipement. Cette intégration peut être très poussée : par exemple les deux sous-systèmes peuvent être intégrés sur une même carte mère de l'équipement électronique, partageant donc une même plateforme. A l'inverse, l'intégration des deux sous-systèmes peut être plus légère, par exemple en disposant d'un équipement de connexion intermédiaire entre les deux sous-systèmes (par exemple un équipement de connexion pour la mise en œuvre de l'invention). Dans ce cas, chaque sous système est un module de l'équipement électronique. Le point important à comprendre est que l'on dispose de deux sous-systèmes, chacun exécutant un système d'exploitation (OS) différent et que la technique permet à chacun des deux sous-systèmes d'interagir avec l'autre, notamment grâce au partage de leurs états de fonctionnement.

Un tel équipement électronique est, dans un mode de réalisation particulier, un terminal de paiement modulaire.

Un tel terminal de paiement modulaire est composé d'un sous système jouant le rôle de terminal de communication (et exécutant un OS de type Android^{™}, iOS^{™} ou autre) et un sous-système jouant le rôle de terminal de paiement (et exécutant un système d'exploitation sécurisé, fermé)
Selon un mode de réalisation de l'équipement électronique selon l'invention, le premier sous-système est un sous-système de communication et le deuxième sous-système est un terminal de paiement.

Selon un autre mode de réalisation de l'équipement électronique selon l'invention, le premier sous-système est un terminal de paiement et le deuxième sous-système est un sous-système de communication.

L'invention concerne enfin un produit programme d'ordinateur comprenant des instructions de code de programme pour la mise en œuvre d'un procédé tel que décrit précédemment, lorsqu'il est exécuté par un processeur.

L'invention vise également un support d'enregistrement lisible par un ordinateur sur lequel est enregistré un programme d'ordinateur comprenant des instructions de code de programme pour l'exécution des étapes du procédé selon l'invention tel que décrit ci-dessus.

Un tel support d'enregistrement peut être n'importe quelle entité ou sous-système capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé objet de l'invention précité.

### Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[fig. 1] : cette figure représente un terminal de paiement modulaire dans lequel la présente invention est mise en oeuvre,
[fig. 2] : cette figure représente un diagramme des différentes étapes d'un procédé de communication entre un premier sous-système et un deuxième sous-système de paiement constitutifs du terminal de paiement modulaire,
[fig. 3] : cette figure représente un procédé de mise sous tension du terminal de paiement modulaire dans lequel la présente invention est mise en oeuvre,
[fig. 4] : cette figure représente le premier sous-système du terminal de paiement modulaire selon un mode de réalisation de l'invention,
[fig. 5] : cette figure représente un sous-système de paiement du terminal de paiement modulaire selon un mode de réalisation de l'invention.

### Description détaillée de modes de réalisation de l'invention

Le principe général de l'invention repose sur la connaissance par chacun des sous-systèmes constituant un terminal de paiement modulaire d'un état de fonctionnement courant de l'autre sous-système.

En faisant en sorte que chacun des sous-systèmes constitutifs du terminal de paiement modulaire, c'est-à-dire la tablette et le sous-système de paiement, adapte, le cas échéant, son état de fonctionnement courant à celui de l'autre sous-système, il est possible de s'assurer que les opérations relatives à des transactions de paiement sont toujours effectuées avec le niveau de sécurité requis puisque le sous-système de paiement se trouve dans un état de fonctionnement en adéquation avec l'état de fonctionnement de la tablette.

De même, une telle approche permet au sous-système de paiement de bénéficier de la capacité de la tablette à entrer dans un état de fonctionnement dit état de veille contribuant ainsi à réduire la consommation d'énergie du sous-système de paiement et donc la consommation d'énergie globale du terminal de paiement modulaire.

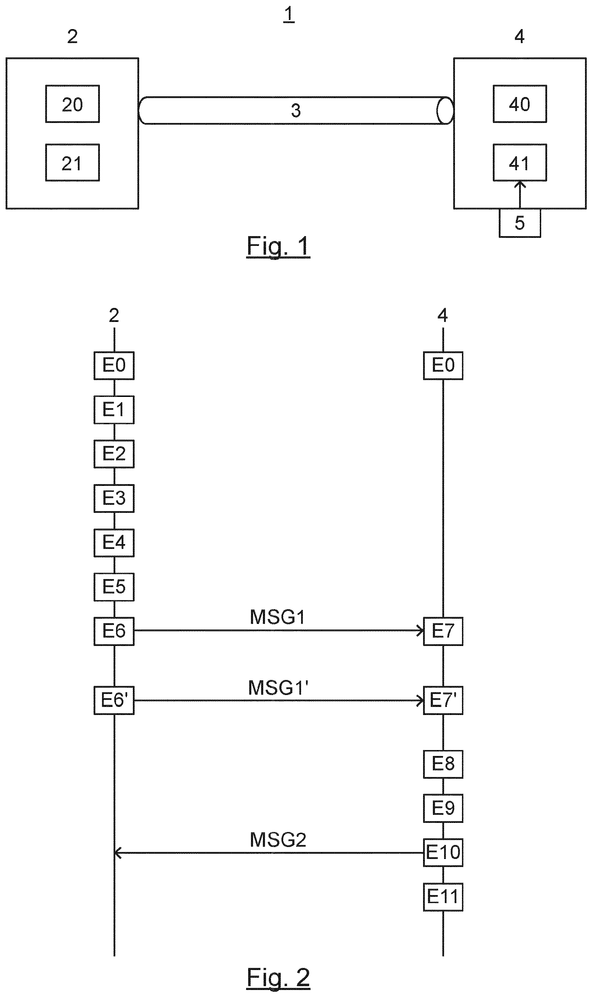

La **[****fig. 1****]** représente un terminal de paiement modulaire 1 dans lequel la présente invention est mise en œuvre.

Un tel terminal de paiement modulaire comprend un premier sous-système 2, tel qu'une tablette ou un Smartphone, connecté au moyen d'une connexion sécurisée 3 à un deuxième sous-système 4, dit sous-système de paiement.

Le sous-système de paiement 4 est capable d'exécuter des opérations relatives à des transactions sécurisées telles que des transactions de paiement.

Le premier sous-système 2 comprend notamment une interface utilisateur 21 et un processeur 20. L'interface utilisateur 21 peut être, dans un mode de réalisation de l'invention, constituée d'un clavier alphanumérique et d'un écran. Dans un autre mode de réalisation de l'invention, l'interface utilisateur 21 peut être un écran tactile. Le sous-système 2 embarque un premier système d'exploitation OS1, comme par exemple le système d'exploitation Android^{™} (par embarquer, on entend qu'un système d'exploitation OS1 fait fonctionner le sous-système, notamment, comme cela est le cas des systèmes d'exploitation).

La connexion sécurisée 3 peut être une connexion filaire établie au travers d'un câble Ethernet ou encore une connexion sans fil en champ proche de type Bluetooth^{®} ou NFC (Near Field Communication pour communication en champ proche).

Le sous-système de paiement 4 comprend un processeur 40 ainsi qu'un lecteur de carte de paiement 41. Dans une première implémentation, le lecteur de carte de paiement 41 est un lecteur de carte sans contact sécurisé utilisant par exemple une connexion NFC afin d'échanger des données avec une carte de paiement 5. Lorsque la carte de paiement 5 est suffisamment proche du lecteur de carte de paiement sans contact, une connexion en champ proche sécurisée est établie entre le lecteur de carte de paiement sans contact et la carte de paiement 5.

Dans une seconde implémentation, le lecteur de carte de paiement 41 est un lecteur de carte à puce dans lequel une carte de paiement 5 est insérée. Une fois la carte de paiement 5 insérée dans le lecteur de carte à puce, une connexion est établie entre la carte de paiement 5 et des têtes de lecture du lecteur de carte à puce permettant l'échange de données entre le lecteur de carte à puce et la carte de paiement 5. Une troisième implémentation comprend l'ensemble des techniques précédemment mentionnées, à savoir un lecteur avec contact (puce, piste) et un lecteur sans contact.

Le sous-système de paiement 4 embarque un deuxième système d'exploitation OS2 spécifique et sécurisé capable d'exécuter les opérations relatives à des transactions sécurisées telles que des transactions de paiement.

Enfin le sous-système 2 et le sous-système de paiement 4 comprennent chacun une base de données (registre mémoire par exemple), respectivement BD2 et BD4.

Le sous-système 2 et le sous-système de paiement 4 peuvent se trouver dans différents états de fonctionnement parmi lesquels :
- un état éveillé,
- un état de veille,
- un état de veille profonde,
- un état inactif,
- un état éteint.

La **[****fig. 2****]** représente un diagramme des différentes étapes d'un procédé de communication entre le premier sous-système 2 et le sous-système de paiement 4 du terminal de paiement modulaire 1. Dans la suite du présent document, il est considéré que le procédé de communication objet de l'invention est initié par le sous-système 2. Cependant, le procédé de communication objet de l'invention peut également, et de manière similaire, être initié par le sous-système de paiement 4.

Au cours d'une étape EO, le sous-système 2 stocke dans la base de données BD2 un premier état de fonctionnement _{EF41} du sous-système de paiement 4. Au cours de cette même étape E0, le sous-système de paiement 4 stocke dans la base de données BD4 un premier état de fonctionnement EF₂₁ du sous-système 2.

Au cours d'une étape EI, le sous-système 2 détecte au moins un évènement EVT1 déclenchant un changement d'état de fonctionnement du sous-système 2 du premier état de fonctionnement EF₂1 vers un deuxième état de fonctionnement EF₂2.

Un tel évènement EVT1 peut être par exemple :
- la détection d'un niveau de batterie du sous-système 2 inférieur ou égal à un premier seuil,
- la détection d'un niveau de puissance d'un signal radio permettant une transmission de donnée depuis le sous-système 2 à destination d'un autre équipement inférieur ou égal à un deuxième seuil,
- la détection d'une action effectuée au moyen de l'interface utilisateur 20 du sous-système 2,
- la réception d'un message en provenance d'un autre équipement,
- la réception d'un message en provenance du sous-système de paiement 4,
- l'expiration d'un compte à rebours.

Un message, selon l'invention, peut être un message classique comprenant une donnée ou une commande, transmis selon un protocole de transmission de messages idoine ; un message peut encore se présenter sous la forme d'un signal transmis directement à destination d'un microprocesseur ou d'un registre, par exemple binaire, ternaire ou quaternaire, pouvant changer d'état à réception de ce signal, le changement d'état déclenchant par exemple la mise en oeuvre d'une commande prédéterminée au niveau du récepteur de ce signal.

Lorsque le procédé de communication est mis en oeuvre par le sous-système de paiement 4, l'événement EVT1 peut être également la lecture de données stockées dans une carte de paiement.

Au cours d'une étape E2, le sous-système 2 détermine si l'état de fonctionnement EF₂1 dans lequel il se trouve doit être modifié suite à la détection de l'évènement EVT1. S'il n'est pas nécessaire de modifier l'état de fonctionnement EF₂1 suite à la détection de l'évènement EVT1, alors le sous-système 2 exécute l'étape E4 directement.

S'il est nécessaire de modifier l'état de fonctionnement EF₂1 suite à la détection de l'évènement EVT1, alors le sous-système 2 exécute l'étape E3. Au cours de cette étape E3, un changement d'état de fonctionnement du sous-système 2 du premier état de fonctionnement EF₂1 vers un deuxième état de fonctionnement EF₂2 est mis en oeuvre.

Ainsi, par exemple, le premier sous-système 2 se trouve dans un premier état de fonctionnement EF₂1 tel qu'un état de veille. Au cours de l'étape EI, le sous-système 2 détecte une action réalisée au moyen de l'interface utilisateur 20, telle que par exemple un appui court sur un bouton de mise en veille du terminal de paiement modulaire 1. Au cours de l'étape E2, le sous-système 2 détermine qu'il est nécessaire de modifier l'état de fonctionnement EF₂1 suite à la détection de l'évènement EVT1. Ainsi, au cours de l'étape E3, le sous-système 2 bascule de son premier état de fonctionnement EF₂1, qui est un état de veille, vers un deuxième état de fonctionnement EF₂2, qui est un état éveillé dans lequel toutes des ressources du premier sous-système 2 sont disponibles.

Lorsque le sous-système 2 a basculé vers l'état de fonctionnement EF₂2, la base de données BD2 est mise à jour, au cours de l'étape E4, et l'état de fonctionnement EF₂2 courant est alors mémorisé à la place de l'ancien état de fonctionnement EF₂1.

Dans une étape E5, le sous-système 2 obtient une donnée représentative d'un état de fonctionnement courant EF₄1 du sous-système de paiement 4. Une telle donnée représentative de l'état de fonctionnement courant EF₄1 du sous-système de paiement 4 est par exemple mémorisée dans la base de données BD2.

Lorsque état de fonctionnement courant _{EF41} du sous-système de paiement 4 est similaire au deuxième état de fonctionnement EF₂2, le sous-système 2 émet à destination du sous-système de paiement 4, un message MSG1 comprenant une donnée représentative du deuxième état de fonctionnement EF₂2 du sous-système 2 au cours d'une étape E6.

Au cours d'une étape E7, à réception du message MSG1, le sous-système de paiement 4 met à jour sa base de données BD4 avec la donnée représentative du deuxième état de fonctionnement EF₂2 du sous-système 2.

Lorsque état de fonctionnement courant EF₄1 du sous-système de paiement 4 n'est pas similaire au deuxième état de fonctionnement EF₂2, le sous-système 2 émet, au cours d'une étape E6', à destination du sous-système de paiement 4, un message MSG1' comprenant au moins une commande déclenchant un changement d'état de fonctionnement du sous-système de paiement 4 vers un nouvel état de fonctionnement EF₄2 similaire au deuxième état de fonctionnement EF₂2 du sous-système 2 lorsqu'elle est exécutée par le deuxième sous-système de paiement 4.

Dans un mode de réalisation particulier du procédé objet de l'invention, le message MSG1' comprend en outre une donnée représentative du deuxième état de fonctionnement EF₂2.. du sous-système 2. Ensuite, au cours d'une étape E7', à réception du message MSG1', le sous-système de paiement 4 met à jour sa base de données BD4 avec la donnée représentative du deuxième état de fonctionnement EF₂2 du sous-système 2.

Dans une étape E8, suite à la réception du message MSG1', le sous-système de paiement 4 exécute la commande de changement d'état et bascule de son état de fonctionnement courant EF₄1 vers un nouvel état de fonctionnement EF₄2 similaire à l'état de fonctionnement EF₂2 du sous-système 2.

Au cours d'une étape E9, le sous-système de paiement 4 met à jour sa base de données BD4 avec une donnée représentative de son nouvel état de fonctionnement courant EF₄2.

Dans une étape E10, le sous-système de paiement 4 émet un message MSG2 à destination du sous-système 2 comprenant une donnée représentative du nouvel état de fonctionnement du deuxième sous-système EF₄2.

Dans une étape E11, le sous-système 2 met à jour sa base de données BD2 avec la donnée représentative du nouvel état de fonctionnement courant EF₄2 du sous-système de paiement 4.

A l'issue de l'étape E11, le sous-système 2 et le sous-système de paiement 4 sont tous deux dans un état de fonctionnement similaire.

Ainsi, dans un premier exemple, le sous-système 2 se trouve dans un état de fonctionnement courant EF₂1 tel qu'un état éveillé. Le sous-système de paiement 4 se trouve dans un état de fonctionnement courant _{EF41} qui est également un état éveillé. Le sous-système 2 alors détecte l'expiration d'un compte à rebours, par exemple une minute s'est écoulée depuis la détection d'une dernière action réalisée au moyen de l'interface utilisateur 20 ou depuis un dernier échange de messages entre le sous-système 2 et le sous-système de paiement 4. Le sous-système 2 détermine alors que son état de fonctionnement EF₂1 courant doit être modifié suite à l'expiration du compte à rebours. Le sous-système 2 bascule alors de l'état de fonctionnement EF₂1, vers un nouvel état de fonctionnement courant EF₂2, qui est un état de veille dans lequel certaines des ressources du premier sous-système 2 sont rendues indisponibles.

La base de données BD2 du sous-système 2 est mise à jour et le nouvel état de fonctionnement EF₂2 courant est alors mémorisé à la place de l'ancien état de fonctionnement EF₂1. Le sous-système 2 obtient également une donnée représentative de l'état de fonctionnement courant _{EF41} du sous-système de paiement 4 en consultant la base de données BD2. Le sous-système 2 détermine alors que l'état de fonctionnement courant EF₄1 n'est pas similaire à son nouvel état de fonctionnement courant EF₂2 puisque le sous-système de paiement 4 est dans un état éveillé alors que le sous-systèmes 2 se trouve dans un état de veille.

Le sous-système 2 émet alors le message MSG1' comprenant au moins une commande déclenchant un changement d'état de fonctionnement du sous-système de paiement 4 vers un nouvel état de fonctionnement EF₄2 qui est également un état de veille.

A réception du message MSG1', le sous-système de paiement 4 exécute la commande de changement d'état de fonctionnement et entre en état de veille. Ainsi, le sous-système de paiement 4 bénéficie de la capacité du sous-système 2 à entrer dans un état de veille contribuant à réduire la consommation d'énergie du sous-système de paiement et donc du terminal de paiement modulaire 1.

Dans un deuxième exemple, le sous-système 2 se trouve dans un état de fonctionnement courant EF₂1 tel qu'un état de veille. Le sous-système de paiement 4 se trouve dans un état de fonctionnement courant _{EF41} qui est également un état de veille. Le lecteur de carte de paiement 41 du sous-système de paiement 4 détecte une carte de paiement 5. Le sous-système de paiement 4 détermine alors que son état de fonctionnement _{EF41} courant doit être modifié suite à la détection de la carte de paiement 5. Le sous-système de paiement 4 bascule alors de l'état de fonctionnement EF₄1, vers un nouvel état de fonctionnement courant EF₄2, qui est un état éveillé.

La base de données BD4 du sous-système de paiement 4 est mise à jour et le nouvel état de fonctionnement EF₄2 courant est alors mémorisé à la place de l'ancien état de fonctionnement _{EF41}. Le sous-système de paiement 4 obtient également une donnée représentative de l'état de fonctionnement courant EF₂1 du sous-système 2 en consultant la base de données BD4. Le sous-système de paiement 4 détermine alors que l'état de fonctionnement courant EF₂1 du sous-système 2 n'est pas similaire à son nouvel état de fonctionnement courant EF₄2 puisque le sous-système 2 est dans un état de veille alors que le sous-système de paiement 4 se trouve dans un état éveillé.

Le sous-système de paiement 4 émet alors un message comprenant au moins une commande déclenchant un changement d'état de fonctionnement du sous-système 2 vers un nouvel état de fonctionnement EF₂2 qui est également un état éveillé.

A réception du message, le sous-système 2 exécute la commande de changement d'état de fonctionnement et entre en état éveillé. Ainsi, l'ensemble des ressources du premier sous-système 2 sont rendues disponibles et peuvent alors contribuer à la mise en oeuvre de la transaction de paiement ayant cours dans le sous-système de paiement 4.

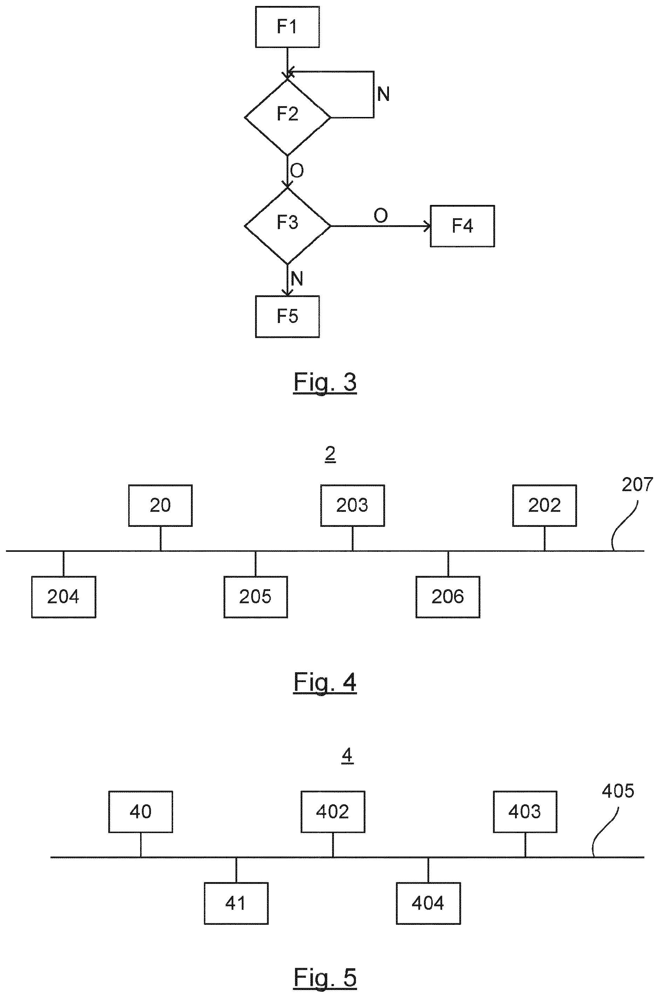

La **[****fig. 3****]** représente un procédé de mise sous tension du terminal de paiement modulaire 1. Un tel procédé de mise sous tension est mis en oeuvre par le sous-système 2.

Dans une étape F1, le terminal de paiement modulaire est hors-tension. En d'autres termes, le sous-système 2 et le sous-système de paiement 4 sont hors-tension.

Dans une étape F2, une première action A1 réalisée au moyen de l'interface utilisateur 21 du sous-système 2 est détectée. Une telle action A1 est par exemple un appui sur un bouton de mise sous tension d'une durée supérieure à un premier seuil S1.

Lorsque l'appui sur le bouton de mise sous tension a une durée supérieure au premier seuil SI, le terminal de paiement modulaire 1 est mis sous tension. En d'autres termes, le sous-système 2 et le sous-système de paiement 4 sont mis sous tension. Le terminal de paiement modulaire 1 est alors fonctionnel et le sous-système 2 et le sous-système de paiement 4 peuvent notamment mettre en œuvre le procédé de communication décrit en référence à la [fig. 2]
Dans une étape F3, le sous-système 2 détecte une deuxième action A2 réalisée au moyen de l'interface utilisateur 21. Une telle action A2 est par exemple un appui sur un bouton de mise sous tension d'une durée supérieure à un premier seuil S2 distinct du premier seul SI.

Dans une étape F4, lorsque l'appui sur le bouton de mise sous tension a une durée supérieure au deuxième seuil S2, un menu est affiché via l'interface utilisateur 21 proposant plusieurs actions : mettre hors-tension le sous-système 2, mettre hors-tension le sous-système de paiement 4, relancer le système d'exploitation OS2 du sous-système 2.

Dans une étape F5, lorsque l'appui sur le bouton de mise sous tension a une durée inférieure au deuxième seuil S2, le terminal de paiement modulaire 1 est mis en veille. En d'autres termes, le sous-système 2 et le sous-système de paiement 4 sont mis en veille.

La **[****fig. 4****]** représente le sous-système 2 selon un mode de réalisation de l'invention.

Le sous-système 2 peut comprendre au moins un processeur matériel 20, une unité de stockage 202, un dispositif de saisie 203, un dispositif d'affichage 204, une interface 205, et au moins une interface de réseau 206 qui sont connectés entre eux au travers d'un bus 207. Bien entendu, les éléments constitutifs du sous-système 2 peuvent être connectés au moyen d'une connexion autre qu'un bus.

Le processeur 20 commande les opérations du sous-système 2. L'unité de stockage 202 stocke au moins un programme pour la mise en œuvre d'un procédé de communication et du procédé de mise sous tension selon un mode de réalisation de l'invention à exécuter par le processeur 20, et diverses données, telles que des paramètres utilisés pour des calculs effectués par le processeur 20, des données intermédiaires de calculs effectués par le processeur 20, etc. Le processeur 20 peut être formé par tout matériel ou logiciel connu et approprié, ou par une combinaison de matériel et de logiciel. Par exemple, le processeur 20 peut être formé par un matériel dédié tel qu'un circuit de traitement, ou par une unité de traitement programmable telle qu'une unité centrale de traitement (Central Processing Unit) qui exécute un programme stocké dans une mémoire de celui-ci.

L'unité de stockage 202 peut être formée par n'importe quel moyen approprié capable de stocker le programme ou les programmes et des données d'une manière lisible par un ordinateur. Des exemples d'unité de stockage 202 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture.

Le dispositif de saisie 203 peut être formé par un clavier, un dispositif de pointage tel qu'une souris à utiliser par un utilisateur pour entrer des commandes. Le dispositif d'affichage 204 peut être également formé par un module d'affichage, tel que par exemple une interface graphique utilisateur ou GUI (pour Graphical User Interface). Le dispositif de saisie 203 et le dispositif d'affichage 204 constituent l'interface utilisateur 20 et peuvent être formés intégralement au moyen d'un écran tactile, par exemple.

L'interface 205 fournit une interface entre le sous-système 2 et le sous-système de paiement 4. L'interface 205 peut communiquer avec le sous-système de paiement 4 via une connexion filaire ou sans fil.

Au moins une interface réseau 206 fournit une connexion entre le sous-système 2 et un équipement distant via un réseau de communication, tel qu'internet. L'interface réseau 206 peut fournir, en fonction de sa nature, une connexion filaire ou sans fil au réseau.

La **[****fig. 5****]** représente un sous-système de paiement 4 selon un mode de réalisation de l'invention.

Le sous-système de paiement 4 peut comprendre au moins un processeur matériel 40, une unité de stockage 402, un module de traitement sécurisé de données 403, un module de lecture 41 de carte de paiement 5, et une interface 404, qui sont connectés entre eux au travers d'un bus 405. Bien entendu, les éléments constitutifs du sous-système de paiement 4 peuvent être connectés au moyen d'une connexion autre qu'un bus.

Le processeur 40 commande les opérations du sous-système de paiement 4. L'unité de stockage 402 stocke au moins un programme pour la mise en œuvre d'un procédé de communication selon un mode de réalisation de l'invention à exécuter par le processeur 40, et diverses données, telles que des paramètres utilisés pour des calculs effectués par le processeur 40, des données intermédiaires de calculs effectués par le processeur 40, etc. Le processeur 40 peut être formé par tout matériel ou logiciel connu et approprié, ou par une combinaison de matériel et de logiciel. Par exemple, le processeur 40 peut être formé par un matériel dédié tel qu'un circuit de traitement, ou par une unité de traitement programmable telle qu'une unité centrale de traitement (Central Processing Unit) qui exécute un programme stocké dans une mémoire de celui-ci.

L'unité de stockage 402 peut être formée par n'importe quel moyen approprié capable de stocker le programme ou les programmes et des données d'une manière lisible par un ordinateur. Des exemples d'unité de stockage 402 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture.

L'interface 404 fournit une interface entre le sous-système de paiement 4 et le sous-système 2. L'interface 404 peut communiquer avec le sous-système 2 via une connexion filaire ou sans fil.

Le module de traitement sécurisé des données 403 est contrôlé par le processeur 40. Le module de traitement sécurisé des données 20 peut être un module logiciel ou une combinaison de matériel et de logiciel.

## Revendications

1. Procédé de communication entre un premier sous-système (2) et au moins un deuxième sous-système (4) embarqués dans un équipement électronique (1), le premier sous-système exécutant un premier système d'exploitation et le deuxième sous-système exécutant un deuxième système d'exploitation, le procédé comprenant :
- une étape de détection (E1), mise en œuvre par le premier sous-système (2) se trouvant dans un premier état de fonctionnement, d'au moins un évènement déclenchant un changement d'état de fonctionnement dudit premier sous-système (2) vers un deuxième état de fonctionnement,
**caractérisé en ce qu'**il comprend les étapes suivantes mises en œuvre par le premier sous-système (2):
- obtention (E5) d'une donnée représentative d'un état de fonctionnement courant du deuxième sous-système (4),
- lorsque l'état de fonctionnement courant du deuxième sous-système (4) est différent du deuxième état de fonctionnement du premier sous-système (2), émission (E6'), à destination du deuxième sous-système (4), d'un message (MSG1') comprenant au moins une commande déclenchant un changement d'état de fonctionnement dudit deuxième sous-système (4) vers un nouvel état de fonctionnement similaire au deuxième état de fonctionnement du premier sous-système (2) lorsqu'elle est exécutée par le deuxième sous-système (4).

2. Procédé de communication selon la revendication 1 dans lequel, lorsque l'état de fonctionnement courant du deuxième sous-système est similaire au deuxième état de fonctionnement du premier sous-système, le procédé comprend une étape d'émission, à destination du deuxième sous-système, d'un message comprenant une donnée représentative du deuxième état de fonctionnement du premier sous-système.

3. Procédé de communication selon la revendication 1 dans lequel, le message comprend également une donnée représentative du deuxième état de fonctionnement du premier sous-système.

4. Procédé de communication selon la revendication 1 comprenant en outre une étape de réception d'un message, émis par le deuxième sous-système, comprenant une donnée représentative du nouvel état de fonctionnement du deuxième sous-système.

5. Procédé de communication selon l'une quelconque des revendications 1 à 4 comprenant en outre une étape de mémorisation, dans un registre mémoire du premier sous-système, de ladite donnée représentative du deuxième état de fonctionnement du premier sous- système et de ladite donnée représentative du nouvel état de fonctionnement courant du deuxième sous-système.

6. Procédé de communication selon la revendication 1 dans lequel un état de fonctionnement du premier sous-système et du deuxième sous-système appartient à un groupe comprenant au moins :
- un état éveillé,
- un état de veille,
- un état de veille profonde,
- un état inactif,
- un état éteint.

7. Procédé de communication selon la revendication 1 dans lequel, lorsque le premier sous-système est un sous-système de communication, l'évènement déclenchant un changement d'état de fonctionnement dudit premier sous-système appartient à un groupe comprenant :
- détection d'un niveau de batterie inférieur ou égal à un premier seuil,
- détection d'un niveau de puissance d'un signal radio permettant une transmission de donnée à destination d'un autre équipement inférieur ou égal à un deuxième seuil,
- détection d'une action effectuée au moyen d'une interface utilisateur du premier sous-système,
- réception d'un message en provenance d'un autre équipement,
- réception d'un message en provenance du deuxième sous-système,
- expiration d'un compte à rebours.

8. Procédé de communication selon la revendication 1 dans lequel, lorsque le premier sous-système est un terminal de paiement, l'évènement déclenchant un changement d'état de fonctionnement dudit premier sous-système appartient à un groupe comprenant :
- détection d'un niveau de batterie inférieur ou égal à un premier seuil,
- réception d'un message en provenance du deuxième sous-système,
- expiration d'un compte à rebours,
- lecture de données stockées dans une carte de paiement.

9. Équipement électronique comprenant un premier sous-système (2) et au moins un deuxième sous-système (4) intégrés dans un équipement électronique (1), le premier sous-système (2) exécutant un premier système d'exploitation et le deuxième sous-système (4) exécutant un deuxième système d'exploitation, le premier sous-système (2) comprenant des moyens de détection d'au moins un évènement déclenchant un changement d'état fonctionnement dudit premier sous-système (2) vers un deuxième état de fonctionnement,
**caractérisé en ce que** le premier sous-système (2) comprend également :
- des moyens d'obtention d'une donnée représentative d'un état de fonctionnement courant du deuxième sous-système (4),
- lorsque l'état de fonctionnement courant du deuxième sous-système (4) est différent du deuxième état de fonctionnement du premier sous-système (2), des moyens d'émission, à destination du deuxième sous-système (4), d'un message (MSG1') comprenant au moins une commande déclenchant un changement d'état de fonctionnement dudit deuxième sous-système (4) vers un nouvel état de fonctionnement similaire au deuxième état de fonctionnement du premier sous-système (2) lorsqu'elle est exécutée par le deuxième sous-système (4).

10. Équipement électronique selon la revendication 9 dans lequel le premier sous-système est un sous-système de communication et le deuxième sous-système est un terminal de paiement.

11. Équipement électronique selon la revendication 9 dans lequel le premier sous-système est un terminal de paiement et le deuxième sous-système est un sous-système de communication.

12. Produit programme d'ordinateur comprenant des instructions de code de programme pour la mise en œuvre d'un procédé de communication selon la revendication 1, lorsqu'il est exécuté par un processeur.

## Patentansprüche

1. Verfahren zur Kommunikation zwischen einem ersten Untersystem (2) und mindestens einem zweiten Untersystem (4), die in einem elektronischen Gerät (1) eingebettet sind, wobei das erste Untersystem ein erstes Betriebssystem und das zweite Untersystem ein zweites Betriebssystem ausführt, wobei das Verfahren umfasst:
- einen Schritt der Erfassung (E1), der von dem ersten Untersystem (2), das sich in einem ersten Betriebszustand befindet, durchgeführt wird, von mindestens einem Ereignis, das eine Änderung des Betriebszustands des ersten Untersystems (2) in einen zweiten Betriebszustand auslöst,
**dadurch gekennzeichnet, dass** es die folgenden Schritte umfasst, die von dem ersten Untersystem (2) durchgeführt werden:
- Erhalten (E5) von Daten, die einen aktuellen Betriebszustand des zweiten Untersystems (4) repräsentieren,
- wenn der aktuelle Betriebszustand des zweiten Untersystems (4) sich vom zweiten Betriebszustand des ersten Untersystems (2) unterscheidet, Senden (E6') einer Nachricht (MSG1') an das zweite Untersystem (4), die mindestens einen Befehl enthält, der eine Änderung des Betriebszustands des zweiten Untersystems (4) in einen neuen Betriebszustand auslöst, der dem zweiten Betriebszustand des ersten Untersystems (2) ähnlich ist, wenn er im zweiten Untersystem (4) ausgeführt wird.

2. Kommunikationsverfahren nach Anspruch 1, wobei, wenn der aktuelle Betriebszustand des zweiten Untersystems dem zweiten Betriebszustand des ersten Untersystems ähnlich ist, das Verfahren einen Schritt des Sendens einer Nachricht an das zweite Untersystem umfasst, die Daten enthält, die den zweiten Betriebszustand des ersten Untersystems repräsentieren.

3. Kommunikationsverfahren nach Anspruch 1, bei dem die Nachricht auch ein für den zweiten Betriebszustand des ersten Untersystems repräsentatives Datum enthält.

4. Kommunikationsverfahren nach Anspruch 1, das außerdem einen Schritt des Empfangens einer Nachricht umfasst, die vom zweiten Untersystem gesendet wird und Daten enthält, die für den neuen Betriebszustand des zweiten Untersystems repräsentativ sind.

5. Kommunikationsverfahren nach einem der Ansprüche 1 bis 4, das außerdem einen Schritt des Speicherns der Daten, die für den zweiten Betriebszustand des ersten Untersystems repräsentativ sind, und der Daten, die für den neuen aktuellen Betriebszustand des zweiten Untersystems repräsentativ sind, in einem Speicherregister des ersten Untersystems umfasst.

6. Kommunikationsverfahren nach Anspruch 1, wobei ein Betriebszustand des ersten Untersystems und des zweiten Untersystems zu einer Gruppe gehört, die mindestens umfasst:
- einem Wachzustand,
- einem Zustand der Wachsamkeit,
- einem Zustand tiefer Wachheit,
- einem inaktiven Zustand,
- einem ausgeschalteten Zustand.

7. Kommunikationsverfahren nach Anspruch 1, wobei, wenn das erste Untersystems ein Kommunikationsuntersystem ist, das Ereignis, das eine Änderung des Betriebszustands des ersten Untersystems auslöst, zu einer Gruppe gehört, die Folgendes umfasst:
- Erkennen eines Batteriestands, der kleiner oder gleich einem ersten Schwellenwert ist,
- Erkennen eines Leistungspegels eines Funksignals, das eine Datenübertragung an ein anderes Gerät ermöglicht, der kleiner oder gleich einem zweiten Schwellenwert ist,
- Erkennung einer Aktion, die mithilfe einer Benutzerschnittstelle des ersten Untersystems ausgeführt wird,
- Empfangen einer Nachricht von einem anderen Gerät,
- Empfangen einer Nachricht vom zweiten Untersystem,
- Ablauf eines Countdowns.

8. Kommunikationsverfahren nach Anspruch 1, bei dem, wenn das erste Untersystem ein Zahlungsterminal ist, das Ereignis, das eine Änderung des Betriebszustands des ersten Untersystems auslöst, zu einer Gruppe gehört, die Folgendes umfasst:
- Erkennen eines Batteriestands, der kleiner oder gleich einem ersten Schwellenwert ist,
- Empfang einer Nachricht vom zweiten Untersystem,
- Ablauf eines Countdowns,
- Lesen von Daten, die auf einer Zahlungskarte gespeichert sind.

9. Elektronisches Gerät mit einem ersten Untersystem (2) und mindestens einem zweiten Untersystem (4), die in einem elektronischen Gerät (1) integriert sind, wobei das erste Untersystem (2) ein erstes Betriebssystem und das zweite Untersystem (4) ein zweites Betriebssystem ausführt, wobei das erste Untersystem (2) Mittel zum Erfassen von mindestens einem Ereignis aufweist, das eine Änderung des Betriebszustands des ersten Untersystems (2) in einen zweiten Betriebszustand auslöst,
**dadurch gekennzeichnet, dass** das erste Untersystem (2) ferner aufweist:
- Mittel zum Gewinnen von Daten, die für einen aktuellen Betriebszustand des zweiten Untersystems (4) repräsentativ sind,
- wenn der aktuelle Betriebszustand des zweiten Untersystems (4) sich vom zweiten Betriebszustand des ersten Untersystems (2) unterscheidet, Mittel zum Senden einer Nachricht (MSG1') an das zweite Untersystem (4), die mindestens einen Befehl enthält, der eine Änderung des Betriebszustands des zweiten Untersystems (4) in einen neuen Betriebszustands auslöst, der dem zweiten Betriebszustand des ersten Untersystems (2) ähnlich ist, wenn er im zweiten Untersystem (4) ausgeführt wird.

10. Elektronische Ausrüstung nach Anspruch 9, wobei das erste Untersystem ein Kommunikationsuntersystem ist und das zweite Untersystem ein Zahlungsterminal ist.

11. Elektronische Ausrüstung nach Anspruch 9, wobei das erste Untersystem ein Zahlungsterminal ist und das zweite Untersystem ein Kommunikationsuntersystem ist.

12. Computerprogrammprodukt mit Programmcodeanweisungen zur Durchführung eines Kommunikationsverfahrens Anspruch 1, wenn es von einem Prozessor ausgeführt wird.

## Claims

1. Method of communication between a first sub-system (2) and at least one second sub-system (4) embedded in electronic equipment (1), the first sub-system executing a first operating system and the second sub-system executing a second operating system, the method comprising:
- a detection step (E1), implemented by the first sub-system (2) being **in** a first operating state, of detecting at least one event triggering a change of operating state of said first sub-system (2) to a second operating state,
**characterised in that** it comprises the following steps implemented by the first sub-system (2):
- obtaining (E5) a data item representative of a current operating state of the second sub-system (4),
- when the current operating state of the second sub-system (4) is different from the second operating state of the first sub-system (2), transmitting (E6'), to the second sub-system (4), a message (MSG1') comprising at least one command triggering a change of operating state of said second sub-system (4) to a new operating state similar to the second operating state of the first sub-system (2) when it is executed by the second sub-system (4).

2. Method of communication according to claim 1, wherein, when the current operating state of the second sub-system is similar to the second operating state of the first sub-system, the method comprises a step of transmitting, to the second sub-system, a message comprising a data item representative of the second operating state of the first sub-system.

3. Method of communication according to claim 1, wherein the message also comprises a data item representative of the second operating state of the first sub-system.

4. Method of communication according to claim 1 further comprising a step of receiving a message, transmitted by the second sub-system, comprising a data item representative of the new operating state of the second sub-system.

5. Method of communication according to any one of claims 1 to 4 further comprising a step of storing, in a memory register of the first sub-system, said data item representative of the second operating state of the first sub-system and said data item representative of the new current operating state of the second sub-system.

6. Method of communication according to claim 1, wherein an operating state of the first sub-system and of the second sub-system belongs to a group comprising at least:
- an awake state,
- an idle state,
- a deep idle state,
- an inactive state,
- an off state.

7. Method of communication according to claim 1, wherein, when the first sub-system is a communication sub-system, the event triggering a change of operating state of said first sub-system belongs to a group comprising:
- detection of a battery level less than or equal to a first threshold,
- detection of a power level of a radio signal allowing a transmission of data to another item of equipment less than or equal to a second threshold,
- detection of an action carried out using a user interface of the first sub-system,
- reception of a message from another item of equipment,
- reception of a message from the second sub-system,
- expiry of a countdown.

8. Method of communication according to claim 1, wherein, when the first sub-system is a payment terminal, the event triggering a change of operating state of said first sub-system belongs to a group comprising:
- detection of a battery level less than or equal to a first threshold,
- reception of a message from the second sub-system,
- expiry of a countdown,
- reading of data stored in a payment card.

9. Electronic equipment comprising a first sub-system (2) and at least one second sub-system (4) integrated in electronic equipment (1), the first sub-system (2) executing a first operating system and the second sub-system (4) executing a second operating system, the first sub-system (2) comprising means for detecting at least one event triggering a change of operating state of said first sub-system (2) to a second operating state,
**characterised in that** the first sub-system (2) also comprises:
- means for obtaining a data item representative of a current operating state of the second sub-system (4),
- when the current operating state of the second sub-system (4) is different from the second operating state of the first sub-system (2), means for transmitting, to the second sub-system (4), a message (MSG1') comprising at least one command triggering a change of operating state of said second sub-system (4) to a new operating state similar to the second operating state of the first sub-system (2) when it is executed by the second sub-system (4).

10. Electronic equipment according to claim 9, wherein the first sub-system is a communication sub-system and the second sub-system is a payment terminal.

11. Electronic equipment according to claim 9, wherein the first sub-system is a payment terminal and the second sub-system is a communication sub-system.

12. Computer program product comprising program code instructions for the implementation of a communication method according to claim 1, when it is executed by a processor.
